# FASCICULE DE BREVET EUROPEEN

(11) **EP 2 866 917 B1**
(45) Date de publication et mention de la délivrance du brevet: **13.03.2019**
(21) Numéro de dépôt: 13730022.4
(22) Date de dépôt: 03.06.2013
(51) Int. Cl.: B01D 53/04, B01D 53/047, B01J 20/28

(54) **ASSEMBLAGE DE MODULES D'ADSORBANTS STRUCTURÉS**
ANORDNUNG VON STRUKTURIERTEN ADSORBIERENDEN MODULEN
ASSEMBLY OF STRUCTURED ADSORBENT MODULES

(30) Priorité: 29.06.2012 FR 1256238
(43) Date de publication de la demande: 06.05.2015
(73) Titulaire: L'Air Liquide Société Anonyme pour l'Etude et l'Exploitation des Procédés Georges Claude, 75007 Paris (FR)
(72) Inventeur: MONEREAU, Christian, F-34000 Montpellier (FR); RODRIGUES, Guillaume, F-94420 Le Plessis Trevise (FR)
(74) Mandataire: Laigneau, Amandine
(86) Numéro de dépôt international: PCT/FR2013/051248
(87) Numéro de publication internationale: WO 2014/001670

(56) Documents cités:
- WO-A1-00/76628
- WO-A1-2005/032694
- WO-A2-02/066152
- WO-A2-2006/074343
- FR-A1- 2 952 553
- FR-A1- 2 967 083
- US-A1- 2008 047 436

## Description

La présente invention se rapporte à une couche adsorbante constituée par un assemblage de modules d'adsorbant structuré, à un adsorbeur comprenant au moins une telle couche et à un procédé mettant en oeuvre un tel adsorbeur dans le but d'épurer un fluide en au moins une de ses impuretés.

De manière générale, un procédé dit par adsorption permet de séparer une ou plusieurs molécules de gaz d'un mélange gazeux les contenant, en exploitant la différence d'affinité d'un adsorbant donné ou, le cas échéant, de plusieurs adsorbants pour ces différentes molécules de gaz.

L'affinité d'un adsorbant pour une molécule gazeuse dépend de la structure et de la composition de l'adsorbant, ainsi que des propriétés de la molécule, notamment sa taille, sa structure électronique et ses moments multipolaires.

Un adsorbant peut être par exemple une zéolite, un charbon actif, une alumine activée, un gel de silice, un tamis moléculaire carboné, une structure métallo-organique, un oxyde ou hydroxyde de métaux alcalins ou alcalino-terreux, ou une structure poreuse contenant une substance capable de réagir réversiblement avec une ou plusieurs molécules de gaz, telle que amines, solvants physiques, complexants métalliques, oxides ou hydroxydes métalliques par exemple.

Les matériaux adsorbants classiques sont sous forme de particules et sont mis en oeuvre dans des récipients (réacteurs) appelés « adsorbeurs ». Les géométries d'adsorbeurs les plus classiques sont les adsorbeurs cylindriques à axe vertical, à axe horizontal et les adsorbeurs radiaux.

Les dits adsorbants standards sont sous forme de billes, généralement de diamètre allant de 0,5 à 5 mm, sous forme de concassés de dimension millimétriques (généralement de 0,5 à 5mm également), sous forme de bâtonnet de diamètre allant de 0,5 à 6mm et de longueur inférieure à 1 cm. Il existe également quelques extrudés de forme plus complexes comme par exemple des bâtonnets trilobés constitués de 3 cylindres accolés.

Ces adsorbants sont déposés en vrac dans les adsorbeurs et constituent un lit.

On peut disposer ainsi plusieurs couches d'adsorbants de nature différentes les unes sur les autres (ou les unes à côté des autres dans le cas d'adsorbeur radial). En fonctionnement, le fluide traverse ces lits successifs en contournant les dites particules et les constituants les plus adsorbables sont arrêtés préférentiellement au sein de l'adsorbant.

L'utilisation des particules les plus petites permet généralement d'améliorer la cinétique d'adsorption et par là l'efficacité du procédé mais en contre partie elles créent sur la phase fluide des pertes de charge importantes.

Pour contrebalancer cet effet, on utilise des adsorbeurs présentant une grande section de passage au fluide tels que les adsorbeurs cylindriques à axe horizontal ou les adsorbeurs radiaux mentionnés ci-dessus.

Cependant, lorsqu'on veut aller plus loin dans l'amélioration de la perte de charge et/ ou de la cinétique, cette technologie conduit à des géométries d'adsorbeurs non industrielles.

C'est par exemple le cas lorsqu'on veut traiter d'importants débits gazeux en basse pression comme pour la capture du CO₂ dans des effluents à pression atmosphérique ou lorsqu'on veut réaliser des cycles rapides, en particulier des cycles PSA.

Pour cette raison, on a récemment développé le concept d'adsorbant structuré qui par opposition aux adsorbants classiques particulaires, sont de géométrie plus complexe, avec des dimensions sensiblement supérieure au centimètre et offrent un passage plus important ou plus aisé au fluide. Par opposition aux adsorbants particulaires (billes, batônnets, concassés) de dimension inférieure au cm, qu'on dépose en vrac dans un adsorbeur, le fluide circulant autour des particules, les adsorbants structurés sont des matériaux solides de dimension allant de quelques centimètres à quelques mètres et présentant des passages libres au gaz, comme des monolithes, des mousses ou des tissus. Ce type d'adsorbant est notamment décrit dans le document F. Rezaei, P. Webley / Separation and Purification Technology 70(2010) 243-256. Les adsorbants structurés présentent (en comparaison des adsorbants granulés) la particularité de permettre une très bonne cinétique et de très faibles pertes de charges sans présenter de limite d'attrition connue. Si ces structures sont aujourd'hui beaucoup plus onéreuses que des adsorbants granulés, leur intérêt économique pour un remplacement complet des lits granulés peut s'avérer décisif s'il s'accompagne d'un gain notable en perte de charge et/ou d'une réduction significative du coût de construction de l'adsorbeur via une diminution du volume d'adsorbant ou une simplification de la construction.

L'adsorbant structuré utilisé préférentiellement est un contacteur à passages parallèles.

Par contacteurs à passages parallèles, on entend un sous groupe des adsorbants structurés dans lequel le fluide passe dans des canaux dont les parois contiennent de l'adsorbant, canaux qui sont essentiellement libres d'obstacles et permettent au fluide de circuler d'une entrée à une sortie du contacteur. Ces canaux peuvent être rectilignes reliant directement l'entrée à la sortie du contacteur ou présenter des changements de direction.

Au cours de sa circulation, le fluide est en contact avec au moins un adsorbant présent au niveau des dites parois.

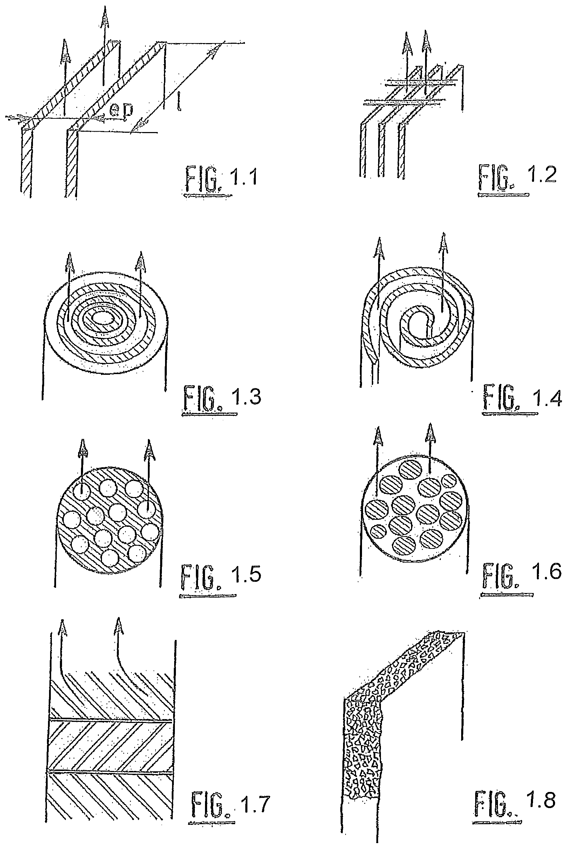

Les figures 1.1 à 1.7 représentent schématiquement, de manière non exhaustive, différents types de contacteurs. En effet, les contacteurs peuvent comprendre des canaux de différentes formes et de dimensions différentes. On distingue alors :
- les canaux rectangulaires d'épaisseur ep faible par rapport à leur largeur 1, c'est à dire avec 1 supérieur à 10 ep (figure 1.1);
- les canaux essentiellement carrés ou rectangulaires mais avec ep dans le même ordre de grandeur que la largeur 1 (figure 1.2);
- les canaux de forme intermédiaire, avec la grande dimension dans un rapport 1,5 à 10 par rapport à la petite dimension (ellipse, rectangle...) ;
- les canaux disposés en couronnes circulaires (figure 1.3) ;
- les canaux disposés en hélice (figure 1.4) ;
- les canaux circulaires (figurel.5) ;

Le fluide peut également circuler dans l'espace libre laissé par des parois solides présentés sous forme de cylindres ou fibres (figure 1.6). Les parois solides peuvent également avoir la configuration «garnissage» comme utilisée en distillation (figure 1.7). Dans ce dernier cas, il est possible d'utiliser toutes les possibilités géométriques relatives aux dits garnissages en jouant sur les angles de pliage, l'orientation des passages par rapport à la verticale (contacteur supposé vertical), les dimensions des canaux...

De nombreuses configurations sont possibles car la géométrie des canaux est variée (triangle, trapèze, ellipse...). De façon générale, dans tous ces types de contacteurs, susceptibles d'être utilisés dans le cadre de l'invention, le fluide qui est préférentiellement un flux gazeux, circule dans des canaux présentant peu (ou pas) d'obstacle à l'écoulement et l'adsorbant est situé - ou constitue - la paroi des dits canaux.

Les monolithes sont généralement fabriqués par extrusion à partir d'une pâte comprenant l'adsorbant et un liant (1.8).

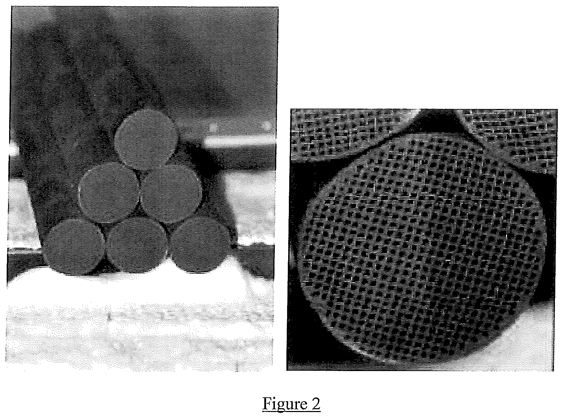

Par rapport à un adsorbant standard obtenu également par extrusion (bâtonnets simple ou trilobés), un monolithe est une structure comportant en son sein des espaces vides servant de passage au gaz (au moins 1 mais très généralement plus) délimités par des parois contenant de l'adsorbant. Les monolithes dont on parle ici ont des dimensions extérieures de plusieurs centimètres, voire de quelques décimètres. Des monolithes sont représentés sur les photos (figure 2).

A titre d'exemple, les documents EP 1 413 348, EP 1 121 981 et WO 2005/094987 décrivent des contacteurs à passages parallèles.

On va parler de module pour désigner l'élément adsorbant tel qu'il peut être fabriqué de façon élémentaire, sous forme de cylindre, de cube, de parallélépipède...

Les dimensions des modules vont dépendre du procédé mis en oeuvre pour leur fabrication. On trouve industriellement des roues adsorbantes utilisées en climatisation allant jusqu'à 5 à 6 mètres de diamètre mais les monolithes extrudés ont généralement des dimensions n'excédant pas quelques dizaines de décimètres.

Afin d'obtenir la section nécessaire pour l'application envisagée, et dans le but de ne pas avoir à utiliser un grand nombre d'adsorbeur en parallèle, il sera donc généralement avantageux d'assembler plusieurs modules en parallèle en une même couche.

Pour des raisons pratiques telles que l'obligation de passer les modules d'adsorption par un trou d'homme ou par les tubulures d'entrée/ sortie, il peut être également nécessaire d'utiliser des modules de taille moyenne, inférieure aux dimensions maximales qu'il serait possible de fabriquer et de les assembler la aussi dans un système plus grand qui aura par exemple la section de l'adsorbeur.

Dans tous ces cas, on utiliserait classiquement une structure support comportant des logements destinés à recevoir les modules élémentaires.

La géométrie de la structure support et des logements destinés à recevoir les dits éléments d'adsorbant structuré peuvent être de forme variée

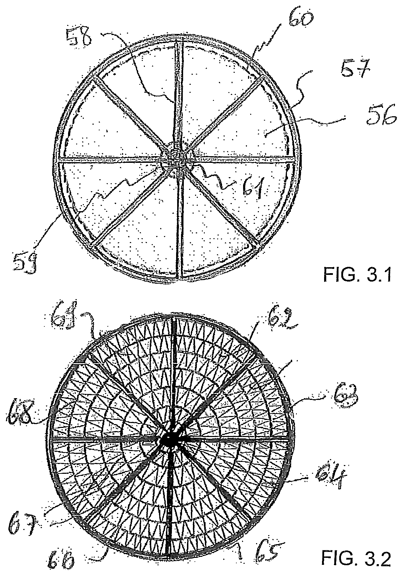

La structure 56 de la Figure 3.1 comporte par exemple une couronne circulaire 57 et des entretoises 58 créant des logements que viennent remplir les éléments d'adsorbant structuré. Cette structure est une structure en rayon destinée à loger des éléments d'adsorbant structuré fabriqué sous forme de roue. La dimension des éléments doit leur permettre de passer et d'être mis en place à partir du trou d'homme. Ces éléments reposent en partie inférieure de la structure sur les supports externe 60 et interne 61. De nombreux types de support et plus généralement de maintien en place des éléments peuvent être utilisés.

La figure 3.2 représente la structure avec les éléments de contacteurs (62, 63..., 69) en place.

La structure métallique comporte 8 alvéoles d'angle 45° dans lesquelles viennent s'insérer des éléments découpés sur une roue dont les parois sont recouvertes d'un adsorbant.

Les divers éléments sont découpés dans une roue dont les dimensions ont été définies pour s'adapter à la structure. Les éléments peuvent avoir leurs faces latérales (parallèle à la circulation du gaz) telles que découpées ou recouvertes par un matériau assurant une protection lors des manipulations.

Afin d'éviter tout passage de gaz entre la surface externe des modules et les parois de leur logement, on réalise une étanchéité par un quelconque des moyens connus (joint, éléments légèrement coniques maintenus sur les parois par une pression ...). Les éléments peuvent eux-mêmes être logés dans une enveloppe, l'étanchéité entre l'élément et la paroi de la dite enveloppe pouvant être réalisée de façon définitive par une colle, un liant..., l'enveloppe étant fixée alors de façon étanche dans la structure par exemple par un joint à la périphérie.

S'il est efficace, le support avec ses logements peut être d'un coût élevé surtout si les modules sont de petite taille par rapport à l'adsorbeur. Parois et étanchéités correspondent à une perte de volume utile et à un poids supplémentaires. De plus l'existence des logements, de par leur capacité thermique et conductibilité thermique, modifie localement les effets thermiques de l'adsorbant et crée des hétérogénéités dans le système. Le document US 2008/047436 divulgue une couche adsorbante comprenant au moins 2 modules adjacents d'adsorbant structuré, disposés en parallèle dans le sens de circulation du fluide, caractérisé en ce qu'au moins l'une des deux surfaces en regard des 2 modules adjacents est une surface adsorbante.

Dès lors, un problème qui se pose est de fournir une couche adsorbante améliorée comprenant plusieurs modules d'adsorbant structuré.

Une solution de la présente invention est une couche adsorbante pour adsorption d'un fluide, comprenant au moins 2 modules adjacents d'adsorbant structuré, disposés en parallèle dans le sens de circulation du fluide, caractérisé en ce qu'au moins une des deux surfaces en regard des 2 modules adjacents est une surface adsorbante, les modules d'adsorbant structuré comprennent des canaux de largeur l, l'espace moyen entre deux modules adjacents est inférieur ou égal à 1 et ladite couche adsorbante ne comprend aucun moyen d'étanchéité entre les modules.

Ainsi, dans la couche adsorbante selon l'invention, l'espace compris entre deux modules adjacents travaille, c'est-à-dire retient les impuretés, de la même façon que les modules proprement dits. Il n'y a donc plus d'étanchéité à prévoir entre les modules. De plus, toute la section de la couche adsorbante devient utile, ce qui permet de diminuer la section de l'adsorbeur et de réduire son coût.

De préférence le fluide est un flux gazeux.

La couche adsorbante selon l'invention peut être telle que : les deux surfaces en regard des deux modules adjacents sont des surfaces adsorbantes.

Les modules d'adsorbant structuré comprennent des canaux de largeur l, et l'espace moyen entre deux modules adjacents est inférieur ou égal à 1; ainsi la vitesse du fluide circulant dans l'espace situé entre les modules est soit inférieure soit égale à la vitesse du fluide circulant dans le module.

La couche adsorbante selon l'invention peut présenter une ou plusieurs des caractéristiques ci-dessous:
- l'espace entre deux modules adjacents est maintenu constant par des espaceurs.
- les modules adjacents s'emboîtent.
- les modules adjacents d'adsorbant structuré sont des contacteurs à passages parallèles.
- les modules adjacents sont identiques ou de géométries différentes.

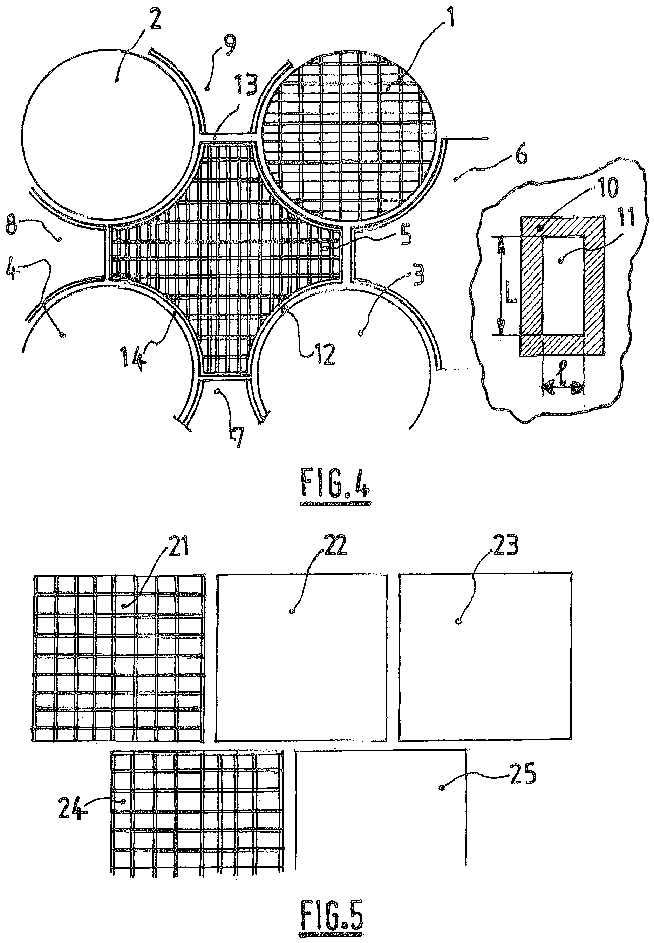

La Figure 4 représente en coupe un premier agencement de modules selon l'invention.

Les modules sont de type cylindrique (1, 2, 3, 4...), soit de type en croix (5, 6, 7, 8, 9...)

Seuls les modules 1 et 5 sont représentés en détail avec les parois adsorbantes (en foncé sur la figure) et les canaux (en clair) destinés au passage du fluide. Dans cet exemple, les canaux 11 sont de longueur L et de largeur l, 10 étant la paroi adsorbante.

Les modules cylindriques sont adjacents à 4 modules en croix. Les modules en croix sont adjacents à 4 modules cylindriques et à 4 modules en croix. La distance (12, 13, 14...) entre les différentes parois se faisant face est telle que d est inférieur ou égale à la largeur l des canaux des modules. Les parois extérieures d'au moins un type de modules (ici, ceux en forme de croix) sont adsorbantes afin d'épurer le fluide passant par les intervalles entre parois. Préférentiellement, la paroi externe de tous les modules est adsorbante.

La Figure 5 représente un second arrangement pour lequel tous les modules (21, 22, 23, 24, 25...) sont identiques (extrudés de section carrée).

Les parois des modules ont généralement des épaisseurs allant de 50 à 1000 microns et les canaux sont de largeur allant également de 50 à 1000 microns. L'espacement entre les surfaces se faisant face peut aller de quelques microns à quelques centaines de microns suivant les dimensions internes des modules.

On parle ici de dimensions moyennes car tous les éléments comportent des tolérances de fabrication allant de quelques microns à quelques dizaines de microns.

La présente invention a également pour objet un adsorbeur comprenant au moins une couche adsorbante selon l'invention, et une virole.

De préférence, la paroi de l'adsorbeur joue le rôle de la virole.

Selon le cas, l'adsorbeur peut présenter une ou plusieurs des caractéristiques suivantes :
- les modules d'adsorbant structuré situés en périphérie de la couche adsorbante sont découpés de manière à épouser la forme de la virole ;
- l'espace libre entre la virole et les modules d'adsorbant structuré situés en périphérie de la couche adsorbante est inférieur ou égal à d, de préférence inférieur ou égal à d/2, et la surface de la virole en regard avec les modules situés en périphérie de la couche adsorbante et/ou la surface des modules en regard avec la virole est une surface adsorbante ; ainsi la vitesse du fluide circulant entre la virole et la couche adsorbante est soit inférieure soit égale à la vitesse du fluide circulant dans les modules, de préférence inférieure ou égale à la vitesse du fluide circulant dans les modules divisée par deux, et /ou l'espace compris entre la virole et la couche adsorbante retiendra les impuretés du fluide de la même façon que les modules. Il n'y a donc plus d'étanchéité à prévoir entre la virole et la couche adsorbante ;
- l'espace entre la virole et les modules d'adsorbant structuré situés en périphérie de la couche adsorbante est maintenu constant par des espaceurs ;
- l'espace libre entre la virole et les modules d'adsorbant structuré situés en périphérie de la couche adsorbante est bouché de manière à interdire le passage du fluide ;
- ledit adsorbeur comprend un support permettant le soutien des modules d'adsorbant structuré, ledit supportant étant fixé à la virole et permettant le passage du fluide ;
- une première et une deuxième couches adsorbantes selon l'invention, les modules de la première couche adsorbante présentant une géométrie et/ou un adsorbants différents de ceux des modules de la deuxième couche adsorbante.

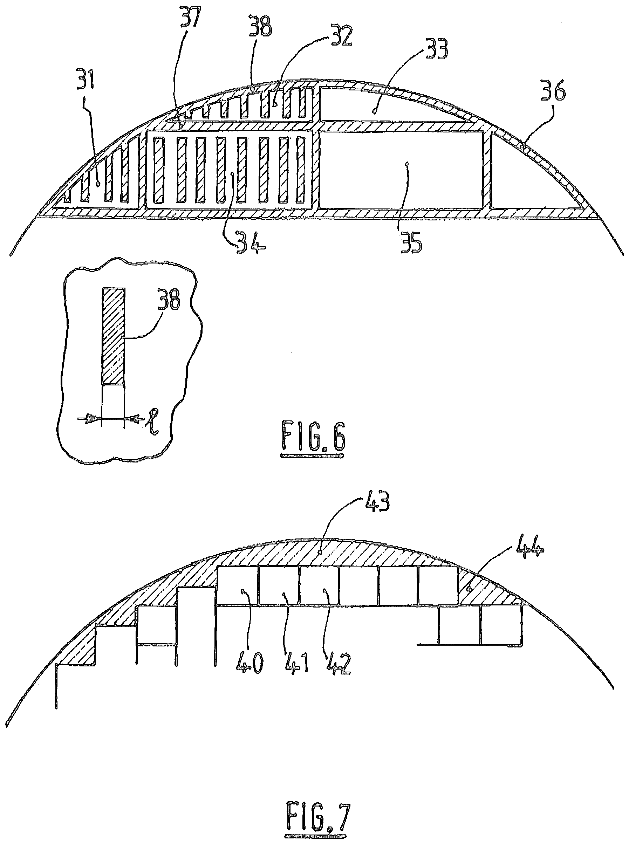

L'invention va être décrite plus en détail à l'aide des figures 6 à 10.

Les Figures 6 et 7 montrent comment les modules peuvent s'intégrer dans une virole.

Plus particulièrement, dans la Figure 6, les modules à la périphérie (31, 32,33...) sont découpés afin d'épouser la forme de la virole 36, ici cylindrique. Les modules intérieurs (34, 35...) sont entiers, tels que fabriqués, de section rectangulaire. Le fluide circule dans des canaux 38 de largeur l. L'espace entre module e1 sera inférieur à 1 mais proche de 1 alors qu'ici l'espace e2 entre la virole et les modules de la périphérie sera généralement choisi inférieur ou égal à 1/2. Il sera en effet plus avantageux pour la réalisation que la surface de la virole ne soit pas recouverte d'adsorbant. Il convient alors de limiter le débit du fluide passant à la paroi de sorte que la quantité d'adsorbant qu'il rencontre soit suffisante pour ne pas créer un passage préférentiel pour les constituants à arrêter.

Un calcul de pertes de charge à la périphérie permet de déterminer l'espacement maximum e2max qu'il convient de respecter pour que le ratio local " quantité d'adsorbant sur débit" soit suffisant.

La virole représentée (36) peut faire partie de l'adsorbeur lui-même, les modules étant alors mis en place directement dans ledit adsorbeur ou bien faire partie intégrante de la couche adsorbante. Dans ce dernier cas, c'est le système comprenant les contacteurs et la virole associée qu'on introduit dans l'adsorbeur. L'étanchéité entre la paroi interne de l'adsorbeur et la virole externe de la couche adsorbante se fait quant à elle par un des moyens classiques et connus qui ne seront pas décrits plus en détail ici (joint, simple balayette, double balayette...)

La Figure 7 illustre à l'inverse le cas où la couche adsorbante est composée de contacteurs tels que fabriqués (40, 41, 42...). Les espaces libres entre les contacteurs de la périphérie et la virole (43, 44...) sont alors bouchés afin d'interdire le passage du gaz dans ce volume (par de l'époxy par exemple).

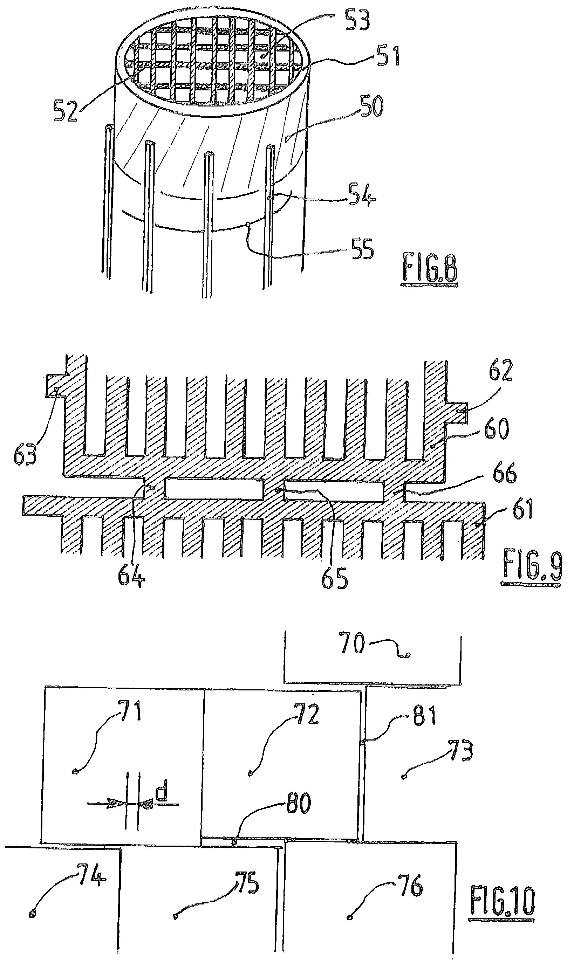

La Figure 8 représente un module de type contacteur cylindrique à passages parallèles 50 fabriqué par extrusion, de dimension typique c'est-à-dire de diamètre d'environ 0,2 mètre et de hauteur environ 0,5 mètre. Assemblé avec des contacteurs en forme de croix, extrudés eux aussi (comme représenté sur la Figure 4), cela peut réaliser une couche adsorbante de grande section, par exemple supérieure à 1 m², et de hauteur 0,5 mètre.

Les parois internes 52 et externe 51 sont identiques quant à la composition et contiennent l'adsorbant. A l'intérieur du contacteur, le fluide circule au travers des canaux 53. L'espacement entre contacteur cylindrique et contacteur en croix est maintenu approximativement constant par le biais des fils 54 eux-mêmes maintenus serrés sur le contacteur par les fils minces 55. Les fils minces étant eux-mêmes rattachés soit :
- à eux-mêmes (bout à bout) s'ils entourent complètement le contacteur, soit
- à un « gros fil » 54, s'ils sont bobinés en spirale de haut en bas.

L'épaisseur des fils 54 sera par exemple de l'ordre de 100 à 250 microns alors que les fils de maintien seront d'un diamètre de 10 à 20 microns.

La Figure 9 représente une coupe partielle montrant un contacteur 60 et un contacteur 61 de type extrudés. L'écartement entre les contacteurs est maintenu constant et dans ce cas égal à la largeur des canaux des extrudés par l'intermédiaire des "baguettes" (63, 64, 65, 66...) qui font partie intégrante de l'extrudé 60.

Il est également possible de ne rien prévoir pour maintenir volontairement un écart irrégulier entre les surfaces adsorbantes des différents contacteurs (70, 71, 72, ...76,...) comme présenté sur la Figure 10. Des espacements (80, 81,...) vont alors se produire localement en fonction des tolérances de construction. Ces dernières seront alors fixées de telle sorte que l'espacement maximum emax (ici, l'espace 80) soit inférieur à la largeur d des canaux des contacteurs.

Dans le cas où la virole extérieure fait partie de la couche adsorbante pour permettre sa manutention et un enfilage simple dans l'adsorbeur, la dite virole peut être "serrée" contre les contacteurs par un moyen quelconque (tirant, ruban...) afin de limiter les écarts entre la virole et les contacteurs de la périphérie et de façon plus générale pour resserrer les contacteurs (avec éventuellement les écarteurs) entre eux.

On a représenté jusqu'à présent des contacteurs de forme simple (carré, cylindrique, rectangulaire, en forme de croix). A partir du moment où les contacteurs sont extrudés, on pourrait imaginer des formes variées telles qu'elles s'emboîtent comme des morceaux de puzzles ou comme dans les oeuvres de Escher.

Quelle que soit la forme des contacteurs, l'objet de cette invention consiste en ce qu'ils s'emboîtent de manière à laisser volontairement ou à cause des défauts ou tolérances de fabrication des espacements entre eux suffisamment faibles pour que la vitesse de circulation du fluide soit inférieure ou au maximum égale à la vitesse de ce même fluide dans les passages qui lui sont réservés au sein des contacteurs.

Le fait d'avoir une paroi extérieure adsorbante, de façon similaire aux parois internes du contacteur, fait que le débit de fuite rencontre au moins en proportion la quantité suffisante d'adsorbant pour réaliser la séparation visée dans le procédé.

La hauteur H des couches adsorbantes qu'il est possible de réaliser sera limitée par celle des contacteurs, c'est-à-dire généralement, entre 200 et 500 mm, plus exceptionnellement 1 mètre.

Il pourra être nécessaire d'installer dans un adsorbeur plusieurs couches successives soit identiques, soit de caractéristiques différentes.

Par caractéristiques différentes, on entend par exemple dimensions des canaux, tailles des cristaux ou des particules d'adsorbants, épaisseur des parois...mais aussi nature de l'adsorbant.

Un adsorbeur d'un PSA H2 pourra par exemple comprendre dans le sens de circulation du gaz à traiter une couche adsorbante d'alumine activée ou de gel de silice de 0,2 m, 3 couches de 0,5 m de hauteur de charbon actif, 1 couche de charbon actif de 0,5 m avec une cinétique améliorée, une couche adsorbante à base de zéolite X de 0,5 m, une couche de zéolite 5A de 0,5 m également.

Préférentiellement, chaque couche sera formée de contacteurs à passages parallèles obtenus par extrusion. Le diamètre des couches adsorbantes, selon le débit de gaz à traiter, peut aller de quelques dizaines de centimètres à plusieurs mètres.

L'invention pourra être ainsi appliquée aux divers procédés PSA, tels que PSA O₂, N₂, CO₂, CH₄, H₂. Par PSA, on entend ici tout type de procédé mettant en oeuvre des variations de pression (PSA proprement dit, VPSA, PTSA, MPSA, RPSA - PSA à cycle rapide-, etc....).

Plus généralement, elle peut être appliquée à tout type de procédé par adsorption : lit de garde, TSA.

## Revendications

1. Couche adsorbante pour adsorption d'un fluide, comprenant au moins 2 modules adjacents d'adsorbant structuré, disposés en parallèle dans le sens de circulation du fluide, **caractérisé en ce que** :
- au moins une des deux surfaces en regard des 2 modules adjacents est une surface adsorbante,
- les modules d'adsorbant structuré comprennent des canaux de largeur l,
- l'espace moyen d ou e1 entre deux modules adjacents est inférieur ou égal à 1, et
- ladite couche adsorbante ne comprenant aucun moyen d'étanchéité entre les modules.

2. Couche adsorbante selon la revendication 1, **caractérisé en ce que** les deux surfaces en regard des deux modules adjacents sont des surfaces adsorbantes.

3. Couche adsorbante selon l' une des revendications 1 et 2, **caractérisé en ce que** l'espace moyen entre deux modules adjacents est maintenu constant par des espaceurs.

4. Couche adsorbante selon l'une des revendications précédentes, **caractérisé en ce que** les modules adjacents s'emboîtent.

5. Couche adsorbante selon l'une des revendications précédentes, **caractérisé en ce que** les modules adjacents d'adsorbant structuré sont des contacteurs à passages parallèles.

6. Couche adsorbante selon l'une des revendications précédentes, **caractérisé en ce que** les modules adjacents sont identiques ou de géométries différentes.

7. Adsorbeur comprenant :
- au moins une couche adsorbante selon l'une des revendications 1 à 6, et
- une virole.

8. Adsorbeur selon la revendication 7, **caractérisé en ce que** les modules d'adsorbant structuré situés en périphérie de la couche adsorbante sont découpés de manière à épouser la forme de la virole.

9. Adsorbeur selon l'une des revendications 7 ou 8, **caractérisé en ce que** :
- l'espace libre e2 entre la virole et les modules d'adsorbant structuré situés en périphérie de la couche adsorbante est inférieur ou égal à 1, et
- la surface de la virole en regard avec les modules situés en périphérie de la couche adsorbante et/ou la surface des modules en regard avec la virole est une surface adsorbante.

10. Adsorbeur selon la revendication 9, **caractérisé en ce que** l'espace libre entre la virole et les modules d'adsorbant structuré situés en périphérie de la couche adsorbante est maintenu constant par des espaceurs.

11. Adsorbeur selon la revendication 7, **caractérisé en ce que** l'espace libre entre la virole et les modules d'adsorbant structuré situés en périphérie de la couche adsorbante est bouché de manière à interdire le passage du fluide.

12. Adsorbeur selon l'une des revendications 7 à 11, **caractérisé en ce que** ledit adsorbeur comprend un support permettant le soutien des modules d'adsorbant structuré, ledit supportant étant fixé à la virole et permettant le passage du fluide.

13. Adsorbeur selon l'une des revendications 7 à 12, comprenant au moins une première et une deuxième couches adsorbantes selon l'une des revendications 1 à 7, les modules de la première couche adsorbante présentant une géométrie et/ou un adsorbant différents de ceux des modules de la deuxième couche adsorbante.

14. Utilisation d'un adsorbeur selon l'une des revendications 7 à 13, dans un cycle de type PSA, VPSA, TSA ou PTSA.

## Patentansprüche

1. Adsorbierende Schicht zur Adsorption eines Fluids, umfassend mindestens 2 benachbarte Module eines strukturierten Adsorptionsmittels, die parallel in die Zirkulationsrichtung des Fluids angeordnet sind, **dadurch gekennzeichnet, dass**:
- mindestens eine der beiden den 2 benachbarten Modulen zugewendeten Oberflächen eine adsorbierende Oberfläche ist,
- die Module eines strukturierten Adsorptionsmittels Kanäle der Breite 1 umfassen,
- der Durchschnittsabstand d oder e1 zwischen zwei benachbarten Modulen kleiner oder gleich 1 ist, und
- wobei die adsorbierende Schicht kein Abdichtmittel zwischen den Modulen umfasst.

2. Adsorbierende Schicht nach Anspruch 1, **dadurch gekennzeichnet, dass** die beiden den beiden benachbarten Modulen zugewendeten Oberflächen adsorbierende Oberflächen sind.

3. Adsorbierende Schicht nach einem der Ansprüche 1 und 2, **dadurch gekennzeichnet, dass** der Durchschnittsabstand zwischen zwei benachbarten Modulen durch Abstandshalter konstant gehalten wird.

4. Adsorbierende Schicht nach einem der vorstehenden Ansprüche, **dadurch gekennzeichnet, dass** die benachbarten Module ineinandergreifen.

5. Adsorbierende Schicht nach einem der vorstehenden Ansprüche, **dadurch gekennzeichnet, dass** die benachbarten Module eines strukturierten Adsorptionsmittels Schütze mit parallelen Durchgängen sind.

6. Adsorbierende Schicht nach einem der vorstehenden Ansprüche, **dadurch gekennzeichnet, dass** die benachbarten Module identisch oder von unterschiedlicher Geometrie sind.

7. Adsorber umfassend:
- mindestens eine adsorbierende Schicht nach einem der Ansprüche 1 bis 6 und
- einen Ringbeschlag.

8. Adsorber nach Anspruch 7, **dadurch gekennzeichnet, dass** die am Umfang der adsorbierenden Schicht befindlichen Module eines strukturierten Adsorptionsmittels derart zugeschnitten sind, dass sie sich der Form des Ringbeschlags anpassen.

9. Adsorber nach einem der Ansprüche 7 oder 8, **dadurch gekennzeichnet, dass**:
- der Freiabstand e2 zwischen dem Ringbeschlag und den am Umfang der adsorbierenden Schicht befindlichen Modulen eines strukturierten Adsorptionsmittels kleiner oder gleich 1 ist, und
- die Oberfläche des Ringbeschlags, der den Modulen zugewendet ist, die sich am Umfang der adsorbierenden Schicht befinden, und/oder die Oberfläche der Module, die dem Ringbeschlag zugewendet sind, eine adsorbierende Oberfläche ist.

10. Adsorber nach Anspruch 9, **dadurch gekennzeichnet, dass** der Freiabstand zwischen dem Ringbeschlag und den am Umfang der adsorbierenden Schicht befindlichen Modulen eines strukturierten Adsorptionsmittels durch Abstandshalter konstant gehalten wird.

11. Adsorber nach Anspruch 7, **dadurch gekennzeichnet, dass** der Freiraum zwischen dem Ringbeschlag und den am Umfang der adsorbierenden Schicht befindlichen Modulen eines strukturierten Adsorptionsmittels derart verschlossen ist, um den Durchgang von Fluid zu untersagen.

12. Adsorber nach einem der Ansprüche 7 bis 11, **dadurch gekennzeichnet, dass** der Adsorber einen Träger umfasst, der das Stützen der Module eines strukturierten Adsorptionsmittels ermöglicht, wobei der Träger am Ringbeschlag befestigt ist und den Durchgang von Fluid ermöglicht.

13. Adsorber nach einem der Ansprüche 7 bis 12, umfassend mindestens eine erste und eine zweite adsorbierende Schicht nach einem der Ansprüche 1 bis 7, wobei die Module der ersten adsorbierenden Schicht eine andere Geometrie und/oder ein anderes Adsorptionsmittel aufweisen als die der Module der zweiten adsorbierenden Schicht.

14. Verwendung eines Adsorbers nach einem der Ansprüche 7 bis 13 in einem Zyklus vom Typ PSA, VPSA, TSA oder PTSA.

## Claims

1. Adsorbent layer for the adsorption of a fluid, comprising at least 2 adjacent structured adsorbent modules, arranged in parallel in the direction of flow of the fluid, **characterised in that**:
- at least one of the two surfaces facing one another of the 2 adjacent modules is an adsorbent surface,
- the structured adsorbent modules comprise channels with a width 1,
- the average space d or e1 between two adjacent modules is inferior or equal to 1, and
- said adsorbent layer does not comprise any sealing means between the modules.

2. Adsorbent layer according to claim 1, **characterised in that** both surfaces facing one another of the two adjacent modules are adsorbent surfaces.

3. Adsorbent layer according to one of the claims 1 or 2, **characterised in that** the average space between two adjacent modules is maintained constant by spacers.

4. Adsorbent layer according to one of the preceding claims, **characterised in that** the adjacent modules slot into one another.

5. Adsorbent layer according to one of the preceding claims, **characterised in that** the adjacent structured adsorbent modules are parallel passage contactors.

6. Adsorbent layer according to one of the preceding claims, **characterised in that** the adjacent modules are identical or have different geometrical features.

7. Adsorber comprising:
- at least one adsorbent layer according to one of the claims 1 to 6, and
- a shell.

8. Adsorber according to claim 7, **characterised in that** the structured adsorbent modules located at the periphery of the adsorbent layer are cut so as to fit with the shape of the shell.

9. Adsorber according to one of the claims 7 or 8, **characterised in that**:
- the free space e2 between the shell and the structured adsorbent module located at the periphery of the adsorbent layer is inferior or equal to 1, and
- the surface of the shell facing the modules located at the periphery of the adsorbent layer and/or the surface of the modules facing the shell is an adsorbent surface.

10. Adsorber according to claim 9, **characterised in that** the free space between the shell and the structured adsorbent modules located at the periphery of the adsorbent layer is maintained constant by spacers.

11. Adsorber according to claim 7, **characterised in that** the free space between the shell and the structured adsorbent modules located at the periphery of the adsorbent layer is obstructed so as to prevent the passage of the fluid.

12. Adsorber according to one of the claims 7 to 11, **characterised in that** said adsorber comprises a support enabling to hold the structured adsorbent modules, said support being secured to the shell and enabling the passage of the fluid.

13. Adsorber according to one of the claims 7 to 12, comprising at least a first and a second adsorbent layer according to one of the claims 1 to 7, the modules of the first adsorbent layer featuring a geometry and/or an adsorbent different from that of the modules of the second adsorbent layer.

14. Use of an adsorber according to one of the claims 7 to 13, in a cycle of the PSA-, VPSA-, TSA- or PTSA-type.
